(19) Europäisches Patentamt
European Patent Office
Office européen des brevets

(11) EP 1 229 103 B1

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(21) Anmeldenummer: **02001574.9**

(22) Anmeldetag: **23.01.2002**

(51) Int Cl.[7]: **C11D 1/72**, C11D 1/825, C11D 1/83
// C11D1:66, C11D1:72, C11D1:722, C11D1:75, C11D1:22

(54) **Hydroxymischether mit hohem Ethoxylierungsgrad**

Mixed hydroxyethers with high ethoxylation degree

Hydroxyéthers mixtes à haut degré d'éthoxylation

(84) Benannte Vertragsstaaten:
**AT BE CH CY DE DK ES FI FR GB GR IE IT LI LU MC NL PT SE TR**

(30) Priorität: **01.02.2001 DE 10104368**
**13.03.2001 DE 10111838**

(43) Veröffentlichungstag der Anmeldung:
**07.08.2002 Patentblatt 2002/32**

(73) Patentinhaber: **Cognis Deutschland GmbH & Co. KG**
**40589 Düsseldorf (DE)**

(72) Erfinder:
- **Raths, Hans-Christian, Dr.**
**40789 Monheim (DE)**
- **Weuthen, Manfred Dr.**
**40764 Langenfeld (DE)**
- **Elsner, Michael**
**42579 Heiligenhaus (DE)**
- **Stanislowski, Detlev**
**40822 Mettmann (DE)**
- **Schmid, Karl-Heinz Dr.**
**40822 Mettmann (DE)**

(56) Entgegenhaltungen:
**EP-A- 1 167 499**
**WO-A-01/79401**
**DE-A- 19 738 866**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die Erfindung betrifft höher-ethoxylierte Hydroxymischether, gegebenenfalls in Verbindung mit in Wasch-, Spül- und Reinigungsmittel üblichen Inhaltsstoffen, gegebenenfalls mit weiteren nichtionischen Tensiden und anionischen Tensiden, sowie die Verwendung derartiger Hydroxymischether zur Verbesserung des Netzverhaltens und der Kunststoffverträglichkeit.

### Stand der Technik

Mittel für das Spülen und Reinigen harter, nichttextiler Oberflächen, die im Haushalt und Gewerbesektor vorkommen sollen meist bei Anwendung ein geringfügiges Schaumvolumen entwickeln, das sich innerhalb von wenigen Minuten signifikant weiter verringert. Mittel dieser Art sind seit langem bekannt und im Markt etabliert. Es handelt sich dabei im wesentlichen um wäßrige Tensidlösungen unterschiedlicher Art mit oder ohne Zusatz von Buildern, Lösungsvermittlern (Hydrotropen) oder Lösungsmitteln. Zum Nachweis der Wirksamkeit bei Beginn der Reinigungsarbeit wird vom Verbraucher zwar ein gewisses Schäumen der Anwendungslösung gewünscht, der Schaum soll jedoch rasch zusammenfallen, damit einmal gereinigte Flächen nicht nachgewischt werden müssen. Zu diesem Zweck werden Mittel der genannten Art üblicherweise mit schwach schäumenden nichtionischen Tensiden versetzt.
Besonders an maschinell gespültes Geschirr werden heute höhere Anforderungen gestellt als an manuell gespültes Geschirr. So wird auch ein von Speiseresten völlig gereinigtes Geschirr dann als nicht einwandfrei bewertet, wenn es nach dem maschinellen Geschirrspülen noch weißliche, auf Wasserhärte oder anderen mineralischen Salzen beruhende Flecken aufweist, die mangels Netzmittel aus eingetrockneten Wassertropfen stammen.
Um glanzklares und fleckenloses Geschirr zu erhalten, setzt man daher Klarspüler ein. Der Zusatz von flüssigem oder festem Klarspüler, der separat zugegeben werden kann, oder bereits in gebrauchsfertiger Darreichungsform mit dem Reinigungsmittel und/oder Regeneriersalz zusammen ("2 in 1", "3 in 1", z.B. in Form von Tabs und Pulvern) vorliegt, sorgt dafür, dass das Wasser möglichst vollständig vom Spülgut abläuft, sodass die unterschiedlichen Oberflächen am Ende des Spülprogramms rückstandsfrei und glänzend sind.

Marktübliche Klarspülmittel stellen Gemische z.B. aus nichtionischen Tensiden, Lösungsvermittlem, organischen Säuren und Lösungsmitteln, Wasser sowie ggf. Konservierungsmittel und Duftstoffe dar Die Aufgabe der Tenside in diesen Mitteln besteht darin, die Grenzflächenspannung des Wassers so zu beeinflussen, dass es in einem möglichst dünnen, zusammenhängenden Film vom Spülgut ablaufen kann, so dass beim anschließenden Trocknungsvorgang keine Wassertropfen, Streifen oder Filme zurückbleiben (sogenannte Netzwirkung bzw. Netzverhalten).
Deswegen müssen Tenside in Klarspülern auch den durch Speisereste auftretenden Schaum in der Geschirrspülmaschine dämpfen. Da die Klarspüler meist Säuren für eine Verbesserung des Klartrockeneffekts enthalten, müssen die eingesetzten Tenside zusätzlich relativ hydrolyseunempfindlich gegenüber Säuren sein.
Klarspüler werden sowohl im Haushalt als auch im gewerblichen Bereichen eingesetzt. In Haushaltsgeschirrspülem wird der Klarspüler meist nach dem Vorspül- und Reinigungsgang bei knapp 40°C-65°C zudosiert. Die gewerblichen Geschirrspülmaschinen arbeiten mit nur einer Reinigungsflotte, die lediglich durch Zugabe der Klarspüllösung aus dem vorhergehenden Spülvorgang erneuert wird. Es findet also während des gesamten Spülprogrammes kein vollständiger Wasseraustausch statt. Daher muß der Klarspüler auch schaumdämpfend wirken, temperaturstabil sein bei einem starken Temperaturgefälle von 85-35°C und außerdem ausreichend stabil gegen Alkali und Aktivchlor sein.

In der deutschen Offenlegungschrift **DE 19738866** werden Tensidmischungen aus Hydroxymischethem und nichtionischen Tensiden, wie Fettalkoholpolyethylenglycol/polypropylenglycolether, gegebenenfalls endgruppenverschlossen, beschrieben, die ein sehr gutes Schaumverhalten aufweisen und in Klarspülmitteln hervorragende Klarspüleffekte zeigen.
Aus der deutschen Offenlegungsschrift **DT 2432757** ist bekannt, das Hydroxymischether als Schaumdämpfungsmittel in Wasch-, Spül- und Reinigungsmittel eingesetzt werden.

Das Dokument EP-A-1 167 499 (Stand der Technik Unter Artikel 54 (3) EPÜ) offenbart Flüssigwaschmittel enthaltend Hydroxymischether mit einem Ethoxylierungsgrad von 40.

Das Dokument WO-A-01 79401 (Stand der Technik unter Artikel 54 (3) EPÜ) zeigt Wasch- und Reinigungsmittel in Form von Portionsbeuteln, enthaltend Hydroxymischether mit einem Ethoxylierungsgrad zwischen 1-50.

**Aufgabe** der vorliegenden Erfindung war Wasch-, Spül- und Reinigungsmittel bereitzustellen, die gleichzeitig ein gutes Schaum- und Reinigungsverhalten, insbesondere jedoch ein sehr gutes Ablaufverhalten, d.h. eine Verbesserung des Netzverhaltens an Kunststoffoberflächen sowie eine hohe Materialverträglichkeit, insbesondere mit Kunststoffen, zeigen. Außerdem sollten sich vereinfacht feste Reiniger-Formulierungen herstellen lassen.
Die **Aufgabe wurde gelöst,** indem ausgewählte Tenside vom Typ Hydroxymischether eingesetzt werden.

## Beschreibung der Erfindung

Gegenstand der Erfindung sind Mittel enthaltend

a. 0,1 bis 15 Gew.% -bezogen auf die Mittel-Tenside, die Hydroxymischether (HME) der Formel (I)

$$R^1O[CH_2CH_2O]_xCH_2CH(OH)R^2 \quad (I),$$

in der $R^1$ für einen linearen oder verzweigten Alkyl- und/oder Alkenylrest mit 4 bis 22 Kohlenstoffatomen, $R^2$ für einen linearen oder verzweigten Alkyl- und/oder Alkenylrest mit 2 bis 22 Kohlenstoffatomen x für 40 bis 80 steht.

b. 5 bis 90 Gew.% -bezogen auf die Mittel - Builder

c. 0,1 bis 6 Gew.% -bezogen auf die Mittel - Reinigungsmittelenzym

d. optional 0,1 bis 40 Gew.% -bezogen auf die Mittel - Bleichmittel und

e. weitere Hilfs- und Zusatzstoffe.

Hydroxymischether

Hydroxymischether sind literaturbekannt und werden beispielsweise in der deutschen Anmeldung **DE 19738866** beschrieben.
Sie werden hergestellt durch Umsetzung von 1,2-Epoxyalkanen ($R^2CHOCH_2$), wobei $R^2$ für einen Alkylund/oder Alkenylrest mit 2 bis 22, insbesondere 6 bis 16 Kohlenstoffatomen steht, mit alkoxylierten Alkoholen.
Bevorzugt im Sinne der Erfindung werden solche Hydroxymischether, die sich von Alkoxylaten von einwertigen Alkoholen der Formel $R^1$-OH mit 4 bis 18 Kohlenstoffatomen ableiten, wobei $R^1$ für einen aliphatischen, gesättigten, geradkettigen oder verzweigten Alkylrest, insbesondere mit 6 bis 16 Kohlenstoffatomen, steht.
Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylakohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für verzweigte Alkohole sind sogenannte Oxoalkohole, die meist 2 bis 4 Methylgruppen als Verzweigungen tragen und nach dem Oxoprozeß hergestellt werden und sogenannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole werden in Form ihrer Alkoxylate eingesetzt, die durch Umsetzung der Alkohole in mit Ethylenoxid auf bekannte Weise hergestellt werden.
Alkoxylate von Alkoholen, die durch Umsetzung mit 40 bis 80 Mol Ethylenoxid entstehen, werden eingesetzt.
Insbesondere bevorzugt sind Hydroxymischether mit 40 bis 60 Ethylenoxideinheiten.

**Bevorzugt im Sinne der Erfindung** werden solche Hydroxymischether, die sich von Ethoxylaten von einwertigen Alkoholen der Formel $R^1$-OH mit 6 bis 18 Kohlenstoffatomen, vorzugsweise 6 bis 16 und **insbesondere** 8 bis 10 Kohlenstoffatomen ableiten, wobei $R^1$ für einen linearen Alkylrest steht und x für 40 bis 60.

**Ganz besonders bevorzugt** sind Hydroxymischether der Formel (I), wobei R1 für einen Alkylrest mit 8 bis 10 Kohlenstoffatomen, insbesondere auf Basis eines nativen Fettalkohols, R2 für einen Alkylrest mit 10 Kohlenstoffatome, insbesondere für einen linearen Alkylrest und x für 40 bis 60 steht.

Ein einer weiteren Ausführungsform werden Mittel beansprucht, die erfindungsgemäßen Hydroxymischether, sowie weitere, in Wasch-, Spül- und Reinigungsmittel übliche Inhaltsstoffe enthalten. Diese üblichen Inhaltsstoffe können, wie nachfolgend beschrieben, Alkyl- und/oder Alkenyloligoglycoside, weitere nichtionische Tenside, anionische Tenside, Builder, Enzyme und weitere Hilfs- und Zusatzstoffe sein.

Alkyl- und/oder Alkenyloligoglykoside

In einer weiteren Ausführungsform enthalten die erfindungsgemäßen Mittel Alkyl- und/oder Alkenyloligoglykoside der Formel (II).

$$R^5O\text{-}[G]_p \quad (II),$$

wobei $R^5$ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

Sie können nach den einschlägigen Verfahren der präparativen organischen Chemie erhalten werden. Stellvertretend für das umfangreiche Schrifttum sei hier auf die Übersichtsarbeit von Biermann et al. in **Starch/Stärke 45, 281 (1993),** B.Salka in **Cosm.Toil. 108, 89 (1993)** sowie J.Kahre et al. in **SÖFW-Journal Heft 8, 598 (1995)** verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside.

Der **Alkylrest** $R^5$ kann sich von primären **gesättigten Alkoholen** ableiten. Typische Beispiele sind Butanol-1, Capron-, Önanth-, Capryl-, Pelargon-, Caprinalkohol, Undecanol-1, Laurylalkohol, Tridecanol-1, Myristylalkohol, Pentadecanol-1, **Cetylalkohol,** Palmitylakohol, Heptadecanol-1, Stearylalkohol, Isostearylalkohol, Nonadecanol-1, Arachidylalkohol, Heneicosanol-1, und Behenylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden.

Der **Alkenylrest** $R^5$ kann sich von primären **ungesättigten Alkoholen** ableiten. Typische Beispiele **ungesättigter Alkohole** sind Undecen-1-ol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren technische Gemische, die wie oben beschrieben erhalten werden können.

**Bevorzugt** werden Alkyl- bzw. Alkenylrest $R^5$, die sich von primären Alkoholen mit 6 bis 16 Kohlenstoffatomen ableiten.

**Insbesondere geeignet** sind Alkyloligoglucoside der Kettenlänge $C_8$-$C_{10}$, die als Vorlauf bei der destillativen Auftrennung von technischem $C_8$-$C_{18}$-Kokosfettalkohol anfallen und mit einem Anteil von weniger als 6 Gew.-% $C_{12}$-Alkohol verunreinigt sein können sowie Alkyloligoglucoside auf Basis technischer $C_{9/11}$-Oxoalkohole.

Der Alkyl- bzw. Alkenylrest $R^5$ kann sich ferner auch von primären Alkoholen mit 12 bis 14 Kohlenstoffatomen ableiten.

Die Indexzahl p in der allgemeinen Formel (II) gibt den Oligomerisierungsgrad (DP), d.h. die Verteilung von Mono- und Oligoglykosiden an und steht für eine Zahl zwischen 1 und 10. Während p in einer gegebenen Verbindung stets ganzzahlig sein muß und hier **insbesondere** die Werte p = 1 bis 3 annehmen kann, ist der Wert p für ein bestimmtes Alkyloligoglykosid eine analytisch ermittelte rechnerische Größe, die meistens eine gebrochene Zahl darstellt.

**Vorzugsweise** werden Alkyl- und/oder Alkenyloligoglykoside mit einem mittleren Oligomerisierungsgrad p von 1,1 bis 2,0 eingesetzt. Aus anwendungstechnischer Sicht sind solche Alkyl- und/oder Alkenyloligoglykoside **bevorzugt,** deren Oligomerisierungsgrad kleiner als 2,0 ist und insbesondere zwischen 1,2 und 1,7 liegt.

Bevorzugt werden Alkyl- und/oder Alkenyloligoglycoside der Formel (II) eingesetzt, wobei p für Zahlen von 1 bis 3 und R5 für einen Alkylrest mit 6 bis 16 Kohlenstoffatomen steht.

**In einer bevorzugten Ausführungsform** enthalten die erfindungsgemäßen Mittel 0,01 bis 25 Gew.%, vorzugsweise 0,025 bis 20 Gew.% und insbesondere 0,1 bis 15 Gew.% Hydroxymischether der Formel (I) berechnet als Aktivsubstanz, bezogen auf die Mittel.

**Aktivsubstanz** definiert sich als die Masse an Tensiden (gerechnet als Reinstoff zu 100%), die in dem Mittel enthalten sind.

**In einer weiteren Ausführungsform** enthalten die erfindungsgemäßen Mittel 0,01 bis 30 Gew.%, vorzugsweise 0,1 bis 20 Gew.% und insbesondere 0,2 bis 15 Gew.% Alkyl- und/oder Alkenyloligoglykoside der Formel (II) berechnet als Aktivsubstanz, bezogen auf die Mittel.

## Nichtionische Tenside

Die erfindungsgemäßen Mittel können weitere nichtionische Tenside enthalten. Typische Beispiele für **nichtionische Tenside** sind Alkoxylate von Alkanolen, endgruppenverschlossene Alkoxylate von Alkanolen ohne freie OH-Gruppen , alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester, und Polysorbate. Sofern die nichtionischen Tenside Polyglycoletherketten enthalten, können diese eine konventionelle, vorzugsweise jedoch eine eingeengte Homologenverteilung aufweisen.

**Bevorzugt** sind die weiteren nichtionische Tenside ausgewählt aus der Gruppe, die gebildet wird von **Alkoxylaten von Alkanolen,** insbesondere Fettalkoholpolyethylenglykol/polypropylenglykolether (FAEO/PO) der Formel (III) bzw. Fettalkoholpolypropylenglykol/polyethylenglykolether (FAPO/EO) der Formel (IV), **endgruppenverschlossene Alkoxylate von Alkanole,** insbesondere endgruppenverschlossene Fettalkoholpolyethylenglykol/polypropylenglykolether bzw. endgruppenverschlossene Fettalkoholpolypropylenglykol/polyethylenglykolether, und **Fettsäureniedrigalkylester** und **Aminoxiden.**

Fettalkoholpolyethylenglykol/polypropylenglykolether

In einer bevorzugten Ausführungsform werden Fettalkoholpoly**ethylenglykol**/poly**propylenglykol**ether der Formel (III), die gegebenenfalls endgruppenverschlossen sind,

$$R^6O(CH_2CH_2O)_n[CH_2(CH_3)CHO]_mR^7 \qquad (III)$$

eingesetzt, in der $R^6$ für einen Alkyl- und/oder Alkenylrest mit 8 bis 22 C-Atomen, $R^7$ für H oder einen Alkylrest mit 1 bis 8 C-Atomen, n für eine Zahl von 1 bis 40, **vorzugsweise** 1 bis 30, **insbesondere** 1 bis 15, und m für 0 oder eine Zahl von 1 bis 10 steht.

Fettalkoholpolypropylenglykol/polyethylenglykolether

Ebenso geeignet sind Fettalkoholpoly**propylenglykol**/poly**ethylenglykol**ether der Formel (IV), die gegebenenfalls endgruppenverschlossen sind,

$$R^8O[CH_2(CH_3)CHO]_q(CH_2CH_2O)_rR^9 \qquad (IV)$$

in der $R^8$ für einen Alkyl- und/oder Alkenylrest mit 8 bis 22 C-Atomen, $R^9$ für H oder einen Alkylrest mit 1 bis 8 C-Atomen, q für eine Zahl von 1 bis 5 und r für eine Zahl von 0 bis 15 steht.

**Einer bevorzugten Ausführungsform** entsprechend enthalten die erfindungsgemäßen Mittel Fettalkoholpolyethylenglykol/polypropylenglykolether der Formel (III), in der $R^6$ für einen aliphatischen, gesättigten, geradkettigen oder verzweigten Alkylrest mit 8 bis 16 C-Atomen, n für eine Zahl von 1 bis 10, und m für 0 und $R^7$ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet. **Auch geeignet** sind von solchen Alkoholethoxylaten solche, die eine eingeengte Homologenverteilung aufweisen.

**Weitere geeignete** Vertreter von nichtendgruppenverschlossenen Vertretern sind solche der Formel (III), in der $R^6$ für einen aliphatischen, gesättigten, geradkettigen oder verzweigten Alkylrest mit 8 bis 16 C-Atomen, n für eine Zahl von 2 bis 7, m für eine Zahl von 3 bis 7 und $R^7$ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (III) sind mit einer Alkylgruppe mit 1 bis 8 C-Atomen verschlossen ($R^7$). Häufig werden derartige Verbindungen in der Literatur auch als Mischether bezeichnet. Geeignete Vertreter sind Methylgruppenverschlossene Verbindungen der Formel (III), in denen $R^6$ für einen aliphatischen, gesättigten, geradkettigen oder verzweigten Alkylrest mit 8 bis 16 C-Atomen, n für eine Zahl von 2 bis 7, m für eine Zahl von 3 bis 7 und $R^7$ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von Alkylgruppenverschlossenen Verbindungen sind solche der Formel (III), in denen $R^6$ für einen aliphatischen, gesättigten, geradkettigen oder verzweigten Alkylrest mit 8 bis 16 C-Atomen, n für eine Zahl von 5 bis 15, m für 0 und $R^7$ für eine Alkylgruppe mit 4 bis 8 C-Atomen steht. Bevorzugt wird der Endgruppenverschluß mit einer geradkettigen oder verzweigten **Butylgruppe** durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (III) oder in Mischung mit ihnen können gegebenenfalls endgruppenverschlossene Fettalkoholpolypropylenglykol/polyethylenglykolether der Formel (IV) enthalten sein. Derartige Verbindungen werden beispielsweise in der deutschen Offenlegungsschrift DE-A1- 43 23 252 beschrieben. Besonders bevorzugte Vertreter der Verbindungen der Formel (IV) sind solche, in denen $R^8$ für einen aliphatischen, gesättigten, geradkettigen oder verzweigten Alkylrest mit 8 bis 16 C-Atomen, q für eine Zahl von 1 bis 5, r für eine Zahl von 1 bis 6 und $R^9$ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Hydroxymischethern als geeignet beschrieben worden sind.

Alkoxylierte Fettsäureniedrigalkylest

Als **alkoxylierte Fettsäureniedrigalkylester** kommen Tenside der Formel **(V)** in Betracht,

$$R^{10}CO\text{-}(OCH_2CHR^{11})_wOR^{12} \qquad (V)$$

in der $R^{10}CO$ für einen linearen oder verzweigten, gesättigten und/oder ungesättigten Acylrest mit 6 bis 22 Kohlenstoffatomen, $R^{11}$ für Wasserstoff oder Methyl, $R^{12}$ für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkylenoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

Aminoxide

Als **Aminoxide** können Verbindungen der Formel **(VI)** und/oder eingesetzt werden.

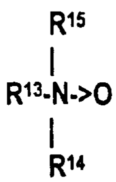

**(VI)**

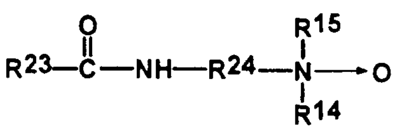

**(VII)**

Bei der Herstellung der Aminoxide der Formel **(VI)** geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel **(VI),** steht $R^{13}$ für einen linearen oder verzweigten Alkylrest mit 6 bis 22, vorzugsweise 12 bis 18 Kohlenstoffatomen, sowie $R^{14}$ und $R^{15}$ unabhängig voneinander für $R^{13}$ oder einen gegebenenfalls hydroxysubstituierten Alkylrest mit 1 bis 4 Kohlenstoffatomen. Vorzugsweise werden Aminoxide der Formel **(VI)** eingesetzt, in der $R^{13}$ und $R^{14}$ für $C_{12/14}$- bzw. $C_{12/18}$-Kokosalkylreste stehen und $R^{15}$ einen Methyl- oder einen Hydroxyethylrest bedeutet. Ebenfalls bevorzugt sind Aminoxide der Formel **(VI),** in denen $R^{13}$ für einen $C_{12/14}$- bzw. $C_{12/18}$-Kokosalkylrest steht und $R^{14}$ und $R^{15}$ die Bedeutung eines Methyl- oder Hydroxyethylrestes haben.
Weitere geeignete Aminoxide sind **Alkylamido-**aminoxide der Formel **(VII),** wobei der Alkylamido-Rest $R^{23}CONH$ durch die Reaktion von linearen oder verzweigten Carbonsäuren, vorzugsweise mit 6 bis 22, bevorzugt mit 12 bis 18 Kohlenstoffatomen, insbesondere aus $C_{12/14}$- bzw. $C_{12/18}$- Fettsäuren mit Aminen entsteht. Dabei stellt $R^{24}$ eine linerare oder verzweigte Alkylengruppe dar mit 2 bis 6, vorzugsweise 2 bis 4 Kohlenstoffatomen und $R^{14}$ und $R^{15}$ haben die in Formel **(VI)** angegebene Bedeutung.

Die **weiteren nichtionische Tenside** können in den erfindungsgemäßen Mitteln in Mengen von 0,1 bis 15 Gew.%, vorzugsweise 0,5 bis 10 Gew.%, insbesondere 1 bis 8 Gew.% enthalten sein, berechnet als Aktivsubstanz, bezogen auf die Mittel.

Gemäß der vorliegenden Erfindung können die erfindungsgemäßen Mittel **anionische Tenside** enthalten.

**Anionische Tenside**

Typische Beispiele für **anionische Tenside** sind Seifen, **Alkylbenzolsulfonate,** sekundäre Alkansulfonate,

Olefinsulfonate, Alkylethersulfonate, Glycerinethersulfonate, α-Methylestersulfonate, Sulfofettsäuren, **Alkyl- und/ oder Alkenylsulfate, Alkylethersulfate,** Glycerinethersulfate, Hydroxymischethersulfate, **Monoglycerid(ether)sulfate,** Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

**Vorzugsweise** sind die **anionischen Tenside** ausgewählt aus der Gruppe, die gebildet wird von Alkylund/ oder Alkenylsulfate, Alkylethersulfate, Alkylbenzolsulfonate, Monoglycerid(ether)sulfate und Alkansulfonate, insbesondere Fettalkoholsulfate, Fettalkoholethersulfate, sekundäre Alkansulfonate und lineare Alkylbenzolsulfonate.

Alkyl- und/oder Alkenylsulfate

Unter Alkyl- und/oder Alkenylsulfaten, die auch häufig als Fettalkoholsulfate bezeichnet werden, sind die Sulfatierungsprodukte primärer Alkohole zu verstehen, die der Formel **(VIII)** folgen,

$$\mathbf{R^{16}O\text{-}SO_3X} \qquad \text{(VIII)}$$

in der $R^{16}$ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.

Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelenschen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von $C_{16/18}$-Talgfettalkoholen bzw. pflanzliche Fettalkohole vergleichbarer C-Kettenverteilung in Form ihrer Natriumsalze.

Alkylethersulfate

Alkylethersulfate ("Ethersulfate") stellen bekannte anionische Tenside dar, die großtechnisch durch $SO_3$- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel **(IX)** folgen,

$$\mathbf{R^{17}O\text{-}(CH_2CH_2O)_aSO_3X} \qquad \text{(IX)}$$

in der $R^{17}$ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische $C_{12/14}$- bzw. $C_{12/18}$- Kokosfettalkoholfraktionen in Form ihrer Natrium- und/oder Magnesiumsalze.

Alkylbenzolsulfonate

Alkylbenzolsulfonate folgen vorzugsweise der Formel **(X),**

$$R^{18}\text{-Ph-}SO_3X \quad (X)$$

in der $R^{18}$ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. **EP 0561825 B1, EP 0561999 B1** (Henkel)]. Die neutralisierten Stoffe können - falls gewünscht - einer Ultrafiltration unterworfen werden, um den Elektrolytgehalt auf ein gewünschtes Maß zu vermindern **[DE 4204700 A1** (Henkel)]. Übersichten zur Chemie der Monoglyceridsulfate sind beispielsweise von A. K. Biswas et al. in **J.Am.Oil.Chem.Soc. 37, 171 (1960)** und F. U. Ahmed **J.Am.Oil.Chem.Soc. 67, 8 (1990)** erschienen. Die im Sinne der Erfindung einzusetzenden **Monoglycerid (ether)sulfate** folgen der Formel **(XI),**

$$\begin{array}{l} CH_2O(CH_2CH_2O)_c\text{-}COR^{19} \\ | \\ CH\text{-}O(CH_2CH_2O)_dH \\ | \\ CH_2O(CH_2CH_2O)_e\text{-}SO_3X \end{array} \quad \textbf{(XI)}$$

in der $R^{19}CO$ für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel **(XI)** eingesetzt, in der $R^{19}CO$ für einen linearen Acylrest mit 8 bis 18 Kohlenstoffatomen steht.

Alkansulfonate

Unter Alkansulfonate versteht man Verbindungen der Formel **(XII).**

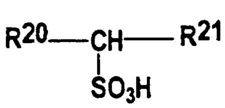

**(XII)**

$R^{20}$ und $R^{21}$ stehen für Alkylreste, wobei $R^{20}$ und $R^{21}$ zusammen nicht mehr als 50 Kohlenstoffatome haben sollen.

**Zweckmäßigerweise** können die Mittel 0,1 bis 20 Gew.%, vorzugsweise 0,25 bis 15 Gew.%, insbesondere 0,4 bis 10 Gew.% **anionische Tenside** enthalten, berechnet als Aktivsubstanz, bezogen auf die Mittel. Den zu 100 Gew.% fehlenden Rest können Hilfs- und Zusatzstoffe sowie Wasser darstellen.

Die erfindungsgemäßen Mittel können als **übliche Inhaltststoffe** bzw. Hilfs- und Zusatzstoffe beispielsweise **Lösungsvermittler** wie Cumolsulfonat, Ethanol, Isopropylalkohol, Ethylenglycol, Propylenglycol, Butylglycol, Diethylenglycol, Propylenglycolmonobutylether, Polyethylen- bzw. polypropylenglycolether mit Molmassen von 600 bis 1 500 000, vorzugsweise mit einer Molmasse von 400 000 bis 800 000, oder insbesondere Butyldiglycol enthalten. Weiterhin können **Abrasivstoffe,** wie Quarz- bzw. Holzmehl oder Polyethylenreibkörper enthalten sein.
In vielen Fällen ist eine zusätzliche bakterizide Wirkung erwünscht, weswegen die Mittel kationische Tenside oder Biozide, beispielsweise Glucoprotamin, enthalten können.
Geeignete **Builder** sind Zeolithe, Schichtsilicate, Phosphate sowie Ethylendiamintetraessigsäure, Nitrilotriessigsäure, Citronensäure und deren Salz, sowie anorganische Phosphonsäuren.
Unter den als Peroxy-**Bleichmittel** dienenden Verbindungen haben das Natriumperborat-Tetrahydrat und das Natriumperborat-Monohydrat eine besondere Bedeutung. Weitere Bleichmittel sind beispielsweise Peroxycarbonat, Citratperhydrate sowie $H_2O_2$-liefernde persaure Salze der Persäuren wie Perbenzoate, Peroxyphthalate oder Diperoxydodecandisäure. Sie werden üblicherweise in Mengen von 0,1 bis 40 Gew.-% eingesetzt. Bevorzugt ist der Einsatz von Natriumperborat-Monohydrat in Mengen von 10 bis 20 Gew.-% und insbesondere von 10 bis 15 Gew.-%.

Als **Enzyme** kommen solche aus der Klasse der Proteasen, Lipase, Amylasen, Cellulasen bzw. deren Gemische in Frage. Besonders gut geeignet sind aus Bakterienstämmen oder Pilzen, wie Bacillus subtilis, Bacillus lichenformis und Strptomyces griseus gewonnene enzymatische Wirkstoffe. Vorzugsweise werden Proteasen vom Subtilisin-Typ und insbesondere Proteasen, die aus Bacillus lentes gewonnen werden, eingesetzt. Ihr Anteil kann etwa 0,1 bis 6, vorzugsweise 0,2 bis 2 Gew.-% betragen. Die Enzyme können an Träger-stoffen adsorbiert oder in Hüllsubstanzen eingebettet sein, um sie gegen vorzeitige Zersetzung zu schützen.

Zusätzlich zu mono- und polyfunktionellen Alkoholen und Phosphonaten können die Mittel weitere **Enzymstabilisatoren** enthalten. Beispielsweise können 0,5 bis 1 Gew.-% Natriumformiat eingesetzt werden Möglich ist auch der Einsatz von Proteasen, die mit löslichen Calciumsalzen und einem Calciumgehalt von vorzugsweise etwa 1,2 Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboratenwie den Salzen der Orthoborsäure ($H_3BO_3$), der Metaborsäure ($HBO_2$) und der Pyroborsäure (Tetraborsäure $H_2B_4O_7$).

Beim Einsatz im maschinellen Waschverfahren kann es von Vorteil sein, den Mitteln übliche **Schauminhibitoren** zuzusetzen. Geeignete Schauminhibitoren enthalten beispielsweise bekannte Organoolysiloxane und/oder Paraffine oder Wachse. Weiterhin enthalten sein können **Schaumregulatoren**, wie beispielsweise Seife, Fettsäuren, insbesondere Kokosfettsäure und Palmkernfettsäure.

Als **Verdickungsmittel** können beispielsweise gehärtetes Rizinusöl, Salze von langkettigen Fettsäuren, die vorzugsweise in Mengen von 0 bis 5 Gew.-% und insbesondere in Mengen von 0,5 bis 2 Gew.-%, beispielsweise Natrium-, Kalium-, Aluminium-, Magnesium- und Titan-Stearate oder die Natrium und/oder Kaliumsalze der Behensäure, sowie weitere polymere Verbindungen eingesetzt werden. Zu den letzten gehören bevorzugt Polyvinylpyrrolidon, Urethane und die Salze_polymerer Polycarboxylate, beispielsweisehomopolymerer oder copolymerer Polyacrylate, Polymethacrylate und insbesondere Copolymere der Acrylsäure mit Maleinsäure, vorzugsweise solche aus 50 bis 10 Gew.-% Maleinsäure. Die relative Molekülmasse der Homopolymeren liegt im allgemeinen zwischen 1000 und 100000, die der Copolymeren zwischen 2000 und 200000, vorzugsweise zwischen 50000 bis 120000, bezogen auf die freie Säure. Insbesondere sind auch wasserlösliche Polyacrylate geeignet, die beispielsweise mit etwa 1% eines Polyallylethers der Sucrose quervernetzt sind und die eine relative Molekülmasse oberhalb 1000000 besitzen Beispiele hierfür sind unter dem Namen Carbopol® 940 und 941 erhältliche Polymere. Die quervemetzten Polyacrylate werden vorzugsweise in Mengen nicht über 1 Gew.-% besonders bevorzugt in Mengen von 0,2 bis 0,7 Gew.-% eingesetzt.

In einer weiteren Ausführungsform sind Mittel, insbesondere für automatische Geschirrspülmaschienen bevorzugt, die 0,1 bis 15, vorzugsweise 0,5 bis 12 Gew.% Tenside enthalten, die Hydroxymischether der Formel (I) enthalten, **insbesondere** solche mit einem Ethoxylierungsgrad x = 40 bis 60, verschlossen mit einem Epoxid mit insgesamt 12 Kohlenstoffatomen (R2=10), generiert aus einem nativen Fettalkohol mit 8 bis 10 Kohlenstoffatomen. Außerdem enthalten die erfindungsgemäßen Mittel 5 bis 90, vorzugsweise 10 bis 80 Gew.% Builder, 0,1 bis 6 Gew.% Reinigungsmittelenzym, optional 0,1 bis 40, vorzugsweise 0,5 bis 30 Gew.% Bleichmittel und Hilfs- und Zusatzstoffe. Gew. % ist bezogen auf das Mittel zu verstehen.

**Ein weiteren Gegenstand** der vorliegenden Erfindung ist die Verwendung von Hydroxymischethern der Formel (I) in Wasch-, Spül- und Reinigungsmitteln, insbesondere zum Spülen und Reinigen von harten Oberflächen, vorzugsweise im Haushalt und den industriellen- und institutionellen Bereich. Besonders geeignet ist der Einsatz in Geschirr-Reinigern, Klarspülern, Badezimmerreiniger, Fußbodenreiniger, Reiniger nach dem clean shower Konzept (z.B. Badezimmerreiniger, der vor und nach dem Duschen auf Wände und Armaturen aufgesprüht wird, damit das Wasser und Seifenreste besser ablaufen, und dadurch ein Nachwischen entfällt), Cockpit-Reiniger (Auto, Flugzeug, Schiff, Motorrad), Fensterreiniger und Allzweckreiniger. Harte Oberflächen sind u.a. Keramikflächen, Metallflächen, lackierte Flächen, Kunststoffoberflächen und Oberflächen aus Glas, Stein, Beton, Porzellan und Holz.

Insbesondere bevorzugt ist die Verwendung der erfindungsgemäßen Hydroxymischether der Formel (I) zur Verbesserung des Netzverhaltens in Wasch-, Spül- und Reinigungsmitteln, vorzugsweise auf harten Oberflächen, insbesondere in maschinellen Geschirr-Reinigern und/oder Klarspülern.

Weiterhin bevorzugt ist die Verwendung von Hydroxymischethern der Formel (I) zur Verbesserung der Kunstoffverträglichkeit in Wasch-, Spül- und Reinigungsmitteln, insbesondere in maschinelle Geschirr-Reinigem und/oder Klarspülem.

Bevorzugt weiterhin ist die Verwendung von Hydroxymischethern der Formel (I) in Kombination mit Alkyl- und/oder Alkenyloligoglykosiden in den bisher aufgeführten Reinigungsbereichen.

Ganz besonders bevorzugt sind die erfindungsgemäßen Hydroxymischether der Formel (I), gegebenenfalls in Kombination mit den bereits beschriebenen weiteren Tensiden, zur vereinfachten Herstellung von festen Reinigerformulierungen. Die erfindungsgemäßen Hydroxymischethern können aufgrund ihrer höheren Schmelzpunkte einfacher in Wasch-, Spül- und Reinigungsmittel-Formulierungen, insbesondere in feste Reiniger eingearbeitet werden.

Im Gegensatz zu den bisher bekannten Hydroxymischethern zeichnen sich die höher ethoxylierten Produkte, neben ihrer schaumdämpfenden Wirkung und der hohen Verträglichkeit, insbesondere gegenüber Kunststoff, durch ihre höheren Schmelzpunkte aus. Dadurch sind sie besonders zur vereinfachten Herstellung von festen Formulierungen geeignet. Ebenso lösen sich diese Hydroxymischether, durch ihre höheren Schmelzpunkte, später in der Reinungsflotte auf und entfalten zeitversetzt, und in höherer Konzentration ihre Wirkung. Dieser Effekt kann besonders vorteilhaft in Klarspülanwendungen genutzt werden. Überraschenderweise bestechen die erfindungsgemäßen Hydroxymischether vorallem durch ihr farblose, klares Aussehen das eine Einarbeitung in eine Vielzahl von Wasch-, Spül- und Reinigungsmitteln, ohne aufwendigen Bleichvorgang erst möglich macht.

## Beispiele

**Screening - Methode zur Bewertung der Benetzungseigenschaften von Tensid - Lösungen gegenüber Kunststoffmaterialien**

Die Benetzungseigenschaften von Tensidlösungen gegenüber Kunststoffen wurden in einem vereinfachten Screening in Anlehnung an die Bedingungen / Testparameter in einer handelsüblichen Geschirrspülmaschine, jedoch ohne die Verwendung einer solchen, bestimmt.

Zur Bewertung der Benetzungseigenschaften werden Kunststoff - Prüfkörper der Abmessung 20 x 5 cm zuerst mit 1%iger NaOH und dann mit iso - Propanol gereinigt. Die so vorbehandelten Prüfkörper werden dann in die zu prüfenden Lösung getaucht und direkt wieder entfernt. Die Bewertung erfolgt visuell durch Aufstellung einer Rangliste bzw. nach einer Notenscala von 1 - 5. Dabei bedeutet 5, daß spontanes Aufreißen des Flüssigkeitsfilms auftritt und die Benetzung vollständig aufgehoben wird. Note 5 wird bei Verwendung von Wasser erhalten. Die Note 1 bedeutet vollständige Benetzung der Kunststoffoberfläche bei einem gleichmäßigem Ablauf des Flüssigkeitsfilms. Note 1 wird bei Verwendung von Na-LAS (z.B. Maranil A 55 / COGNIS) erhalten.

Testparameter:

| | |
|---|---|
| Wasserhärte | 2°d |
| Salzfracht | 700ppm |
| Temperatur | 60°C |
| Tensidkonzentration | 0,1% |

Prüfkörper:

PP (Polypropylen); PE (Polyethylen); PC (Polycarbonat);

In Tabelle 1 sind die Versuchsergebnisse dargestellt, wobei V1 bis V5 Vergleichsversuche und I und II die erfindungsgemäßen Beispiele wiedergeben.

**Tabelle 1: Benetzungseigenschaften an Kunststoffen**

| Zusammensetzung in % Aktivsubstanz | V1 | V2 | V3 | V4 | V5 | I | II |
|---|---|---|---|---|---|---|---|
| Fettalkohol C8-C10 + 60EO - 2-hydroxydodecylether | - | - | - | - | - | - | 0,1 |
| Fettalkohol C8-C10 + 40EO - 2-hydroxydodecylether | - | - | - | - | - | 0,1 | - |
| Fettalkohol C8-C10 + 30EO - 2-hydroxydodecylether | - | - | - | - | 0,1 | - | - |
| Fettalkohol C8-C10 + 10EO - 2-hydroxydodecylether | - | - | - | 0,1 | - | - | - |
| Poly Tergent SLF-18B-45* | - | - | 0,1 | - | - | - | - |
| Maranil A 55 (Na - LAS) | - | 0,1 | - | - | - | - | - |
| Wasser, 2°d / 700ppm NaCl | 100 | 99,9 | 99,9 | 99,9 | 99,9 | 99,9 | 99,9 |
| Benetzungseigenschaften an Kunststoffen | | | | | | | |
| Temperatur: 60°C / Kunststoff "PP" | 5 | 1 | 3 | 4 | 3 | 2 | 3 |
| Temperatur: 60°C / Kunststoff "PE" | 5 | 1 | 3 | 4 | 3 | 2 | 3 |
| Temperatur: 60°C / Kunststoff "PC" | 5 | 1 | 4 | 3 | 2 | 2 | 3 |

*: Alkoholalkoxylat der Firma Olin Chemicals mit 1 PO und 22 EO,

Beim Spannungsriß-Korrosionstest werden die Kunststoffstäbchen kurz dem zu prüfendem Produkt durch Eintauchen oder Sprühen ausgesetzt. Das anhaftende Produkt wird nicht entfernt. Nach 24 Stunden wird erneut eingesprüht oder getaucht. Insgesamt werden die Kunststoffe 5 mal dem Prüfmedium ausgesetzt. Die abschließende Beurteilung erfolgt visuell nach 14 Tagen. Dabei bedeuten:

"1" - unverändert

"2" - Rißansatz / kleiner Riß
"3" - Riß durchgehend
"4" - Bruch

Die erfindungsgemäßen Beispiele sind in Tabelle 2 unter I und II dagestellt.

| **Spannungsriß - Korrosionstest** | | | | | |
|---|---|---|---|---|---|
| **Zusammensetzung in % Aktivsubstan**z | **V1** | **V2** | **V3** | **I** | **II** |
| Fettalkohol C8-C10 + 60EO - 2-hydroxydodecylether | - | - | - | - | 5 |
| Fettalkohol C8-C10 + 40EO - 2-hydroxydodecylether | - | - | - | 5 | - |
| Fettalkohol C8-C10 + 10EO - 2-hydroxydodecylether | - | - | 5 | - | - |
| Poly Tergent SLF-18B-45* | - | 5 | - | - | - |
| Wasser, vollentsalzt | 100 | 95 | 95 | 95 | 95 |
| Spannungsriß - Korrosionstest an Kunststoffen Beurteilung nach 14 Tagen Terez 3010 (ABS) | 1** | 4 | 4 | 3 | 2 |
| Makrolon 3103 (PC) | 1 | 3 | 3 | 2 | 2 |

*: Alkoholalkoxylat der Firma Olin Chemicals mit 1 PO und 22EO,

| **Schmelzpunkte/bereiche** | °**C** |
|---|---|
| Fettalkohol C8-C10 + 60EO - 2-hydroxydodecylether | 48 |
| Fettalkohol C8-C10 + 40EO - 2-hydroxydodecylether | 43 |
| Fettalkohol C8-C10 + 30EO - 2-hydroxydodecylether | 38-39 |
| Fettalkohol C8-C10 + 10EO - 2-hydroxydodecylether | bei RT flüssig mit Trübungen |
| Poly Tergent SLF-18B-45* | 27-32 |

*: Alkoholalkoxylat der Firma Olin Chemicals mit 1 PO und 22 EO,
RT: Raumtemperatur

## Patentansprüche

**1.** Mittel enthaltend

a. 0,1 bis 15 Gew.% -bezogen auf die Mittel- Tenside, die Hydroxymischether der Formel (I)

$$R^1O[CH_2CH_2O]_xCH_2CH(OH)R^2 \qquad (I),$$

in der $R^1$ für einen linearen oder verzweigten Alkyl- und/oder Alkenylrest mit 4 bis 22 Kohlenstoffatomen $R^2$ für einen linearen oder verzweigten Alkyl- und/oder Alkenylrest mit 2 bis 22 Kohlenstoffatomen x für 40 bis 80 steht
b. 5 bis 90 Gew. % -bezogen auf die Mittel- Builder
c. 0,1 bis 6 Gew.% -bezogen auf die Mittel- Reinigungsmittelenzym
d. optional 0,1 bis 40 Gew.% -bezogen auf die Mittel- Bleichmittel und
e. weitere Hilfs- und Zusatzstoffe.

**2.** Mittel nach Anspruch 1, wobei Hydroxymischether der Formel (I) enthalten sind, in der x für 40 bis 60 steht.

**3.** Mittel nach den Ansprüchen 1 und 2, **dadurch gekennzeichnet, dass** sie Hydroxymischether der Formel (I) enthalten in der $R^1$ für einen Alkylrest mit 8 bis 12 Kohlenstoffatomen und $R^2$ für einen Alkylrest mit 8 bis 12 Kohlenstoffatomen steht.

**4.** Mittel nach den Ansprüchen 1 bis 3, **dadurch gekennzeichnet, dass** sie Alkyl- und/oder Alkenyloligoglykoside der Formel (II) enthalten

$$R^5O\text{-}[G]_p \qquad (II)$$

wobei $R^5$ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, enthalten sind.

**5.** Mittel nach Anspruch 4, **dadurch gekennzeichnet, dass** sie Alkyl- und/oder Alkenyloligoglykoside der Formel (II) enthalten, in der p für Zahlen von 1 bis 3 und $R^5$ für einen Alkylrest mit 6 bis 16 Kohlenstoffatomen steht.

**6.** Mittel nach Anspruch 4, **dadurch gekennzeichnet, dass** sie - berechnet als Aktivsubstanz, bezogen auf die Mittel- 0,01 bis 30 Gew.-% Alkyl- und/oder Alkenyloligoglykoside der Formel (II) enthalten.

**7.** Mittel nach einem der Ansprüche 1 bis 6, **dadurch gekennzeichnet, dass** sie weitere nichtionische Tenside enthalten, vorzugsweise ausgewählt aus der Gruppe, die gebildet wird von Alkoxylaten von Alkanolen, endgruppenverschlossenen Alkoxylaten von Alkanolen ohne freie OH-Gruppen, alkoxylierten Fettsäureniedrigalkylestern und Aminoxiden.

**8.** Mittel nach Anspruch 7, **dadurch gekennzeichnet, dass** sie -berechnet als Aktivsubstanz, bezogen auf die Mittel- 0,1 bis 15 Gew.-% weitere nichtionische Tenside enthalten.

**9.** Mittel nach einem der Ansprüche 1 bis 8, **dadurch gekennzeichnet, dass** sie als weitere Komponente anionische Tenside enthalten, vorzugsweise ausgewählt aus der Gruppe, die gebildet wird von Alkyl- und/oder Alkenylsulfaten, Alkylethersulfate, Alkylbenzolsulfonate, Monoglycerid(ether)sulfate und Alkansulfonate.

**10.** Mittel nach Anspruch 9, **dadurch gekennzeichnet, dass** sie - berechnet als Aktivsubstanz, bezogen auf die Mittel - 0,1 bis 20 Gew.-% anionische Tenside enthalten.

**11.** Verwendung von Hydroxymischethern gemäß Formel (I) in Anspruch 1, zur Verbesserung der Kunststoffverträglichkeit, in Wasch-, Spül- und Reinigungsmitteln, insbesondere in maschinellen Geschirr-Reiniger und/oder Klarspülern.

**12.** Verwendung von Hydroxymischethern gemäß Formel (I) in Anspruch 1 zur vereinfachten Herstellung von festen Reinigerformulierungen.

**Claims**

**1.** Compositions containing

a. 0.1 to 15% by weight - based on the composition - of surfactants containing hydroxy mixed ethers corresponding to formula (I):

$$R^1O[CH_2CH_2O]_xCH_2CH(OH)R^2 \qquad (I)$$

in which $R^1$ is a linear or branched alkyl and/or alkenyl group containing 4 to 22 carbon atoms,
$R^2$ is a linear or branched alkyl and/or alkenyl group containing 2 to 22 carbon atoms and
x = 40 to 80,
b. 5 to 90% by weight, based on the composition, of builders,
c. 0.1 to 6% by weight, based on the composition, of detergent enzyme,
d. optionally 0.1 to 40% by weight, based on the composition, of bleaching agents and
e. other auxiliaries and additives.

2. Compositions as claimed in claim 1, **characterized in that** hydroxy mixed ethers of formula (I) in which x = 40 to 60 are present.

3. Compositions as claimed in claims 1 and 2, **characterized in that** they contain hydroxy mixed ethers of formula (I) in which $R^1$ is an alkyl group containing 8 to 12 carbon atoms and $R^2$ is an alkyl group containing 8 to 12 carbon atoms.

4. Compositions as claimed in claims 1 to 3, **characterized in that** they contain alkyl and/or alkenyl oligoglycosides corresponding to formula (II):

$$R^5O\text{-}[G]_p \qquad \text{(II)}$$

in which $R^5$ is an alkyl and/or alkenyl group containing 4 to 22 carbon atoms, G is a sugar unit containing 5 or 6 carbon atoms and p is a number of 1 to 10.

5. Compositions as claimed in claim 4, **characterized in that** they contain alkyl and/or alkenyl oligoglycosides of formula (II), in which p is a number of 1 to 3 and $R^5$ is a $C_{6\text{-}16}$ alkyl group.

6. Compositions as claimed in claim 4, **characterized in that** they. contain 0.01 to 30% by weight alkyl and/or alkenyl oligoglycosides of formula (II), expressed as active substance and based on the composition.

7. Compositions as claimed in any of claims 1 to 6, **characterized in that** they contain other nonionic surfactants preferably selected from the group consisting of alkoxylates of alkanols, end-capped alkoxylates of alkanols with no free OH groups, alkoxylated fatty acid lower alkyl esters and amine oxides.

8. Compositions as claimed in claim 7, **characterized in that** they contain 0.1 to 15% by weight other nonionic surfactants, expressed as active substance and based on the composition.

9. Compositions as claimed in any of claims 1 to 8, **characterized in that** they contain anionic surfactants preferably selected from the group consisting of alkyl and/or alkenyl sulfates, alkylether sulfates, alkyl benzenesulfonates, monoglyceride (ether) sulfates and alkane sulfonates as an additional component.

10. Compositions as claimed in claim 9, **characterized in that** they contain 0.1 to 20% by weight anionic surfactants, expressed as active substance and based on the compositions.

11. The use of hydroxy mixed ethers corresponding to formula (I) in claim 1 for improving compatibility with plastics in laundry detergents, dishwashing detergents and cleaners, more particularly in dishwasher detergents and/or rinse agents.

12. The use of hydroxy mixed ethers corresponding to formula (I) in claim 1 for the simplified production of solid cleaning formulations.

## Revendications

1. Produit contenant :

a. de 0,1 à 15 % en poids - par rapport au produit - de tensioactifs, à savoir les éthers mixtes hydroxylés de formule (I)

$$R^1O[CH_2CH_2O]_xCH_2CH(OH)R^2 \qquad \text{(I),}$$

dans laquelle $R^1$ représente un radical alkyle et/ou alcényle linéaire ou ramifié ayant de 4 à 22 atomes de carbone,
$R^2$ représente un radical alkyle et/ou alcényle linéaire ou ramifié ayant de 2 à 22 atomes de carbone et x a

une valeur de 40 à 80,
b. de 5 à 90 % en poids - par rapport au produit - d'adjuvant actif de détergence,
c. de 0,1 à 6 % en poids - par rapport au produit - d'enzyme pour produit de nettoyage,
d. éventuellement de 0,1 à 40 % en poids - par rapport au produit-d'agent de blanchiment et
e. d'autres additifs et adjuvants.

**2.** Produit selon la revendication 1, dans lequel sont contenus des éthers mixtes hydroxylés de formule (I) dans laquelle x a une valeur de 40 à 60.

**3.** Produit selon les revendications 1 et 2,
**caractérisé en ce qu'**
il contient des éthers mixtes hydroxylés de formule (I) dans laquelle $R^1$ représente un radical alkyle ayant de 8 à 12 atomes de carbone et $R^2$ représente un radical alkyle ayant de 8 à 12 atomes de carbone.

**4.** Produit selon les revendications 1 à 3,
**caractérisé en ce qu'**
il contient des alkyl- et/ou alcényloligoglycosides de formule (II)

$$R^5O\text{-}[G]_p \qquad (II),$$

dans laquelle $R^5$ représente un radical alkyle ou alcényle ayant de 4 à 22 atomes de carbone, G représente un reste glucidique ayant 5 ou 6 atomes de carbone et p représente des nombres allant de 1 à 10.

**5.** Produit selon la revendication 4,
**caractérisé en ce qu'**
il contient des alkyl- et/ou alcényloligoglycosides de formule (II) dans laquelle p représente des nombres allant de 1 à 3 et $R^5$ représente un radical alkyle ayant de 6 à 16 atomes de carbone.

**6.** Produit selon la revendication 4,
**caractérisé en ce qu'**
il contient - exprimé en tant que substance active, par rapport au produit - de 0,01 à 30 % en poids d'alkyl- et/ou alcényloligoglycosides de formule (II).

**7.** Produit selon l'une quelconque des revendications 1 à 6,
**caractérisé en ce qu'**
il contient d'autres tensioactifs non ioniques, de préférence choisis dans le groupe qui est constitué par des produits d'alcoxylation d'alcanols, des produits d'alcoxylation, d'alcanols à groupes terminaux bloqués sans groupes OH libres, des esters alkyliques inférieurs d'acides gras alcoxylés et des oxydes d'amines.

**8.** Produit selon la revendication 7,
**caractérisé en ce qu'**
il contient - exprimé en tant que substance active, par rapport au produit - de 0,1 à 15 % en poids d'autres tensioactifs non ioniques.

**9.** Produit selon l'une quelconque des revendications 1 à 8,
**caractérisé en ce qu'**
il contient comme autres composants des tensioactifs anioniques de préférence choisis dans le groupe qui est constitué par des alkyl- et/ou alcénylsulfates, alkyléthersulfates, alkylbenzènesulfonates, monoglycéride(éther) sulfates et alcanesulfonates.

**10.** Produit selon la revendication 9,
**caractérisé en ce qu'**
il contient - exprimé en tant que substance active, par rapport au produit - de 0,1 à 20 % en poids de tensioactifs anioniques.

**11.** Utilisation d'éthers mixtes hydroxylés de formule (I) selon la revendication 1, pour l'amélioration de la compatibilité

avec des matières plastiques dans des produits de lavage, de rinçage et de nettoyage, en particulier dans des produits de nettoyage et/ou de rinçage de la vaisselle en machine.

**12.** Utilisation d'éthers mixtes hydroxylés de formule (I) selon la revendication 1, pour la production simplifiée de formulations de produits de nettoyage solides.